# EUROPEAN PATENT SPECIFICATION

(11) **EP 3 541 649 B1**
(45) Date of publication and mention of the grant of the patent: **04.11.2020**
(21) Application number: 17709380.4
(22) Date of filing: 23.02.2017
(51) Int. Cl.: B60L 3/00, B60L 3/04, B60L 53/14, B60L 53/30, B60L 53/80, B60L 55/00, H02J 3/32, H02J 7/00

(54) **STATIONARY ENERGY INSTALLATION**
ORTSFESTE LEISTUNGSANLAGE
INSTALLATION FIXE D'ÉNERGIE

(43) Date of publication of application: 25.09.2019
(73) Proprietor: Framatome GmbH, 91052 Erlangen (DE)
(72) Inventor: GATTNAR, Martin, 90768 Fürth (DE); LORZ, Jochen, 90425 Nürnberg (DE); PETER, Christian, 63071 Offenbach (DE)
(74) Representative: Lavoix
(86) International application number: PCT/EP2017/054190
(87) International publication number: WO 2018/153459

(56) References cited:
- EP-A1- 2 538 520
- DE-A1-102015 006 429
- DE-A1-102015 012 110
- US-A1- 2011 273 140
- US-A1- 2012 013 298

## Description

The invention relates to a stationary energy installation for powering a load or a grid and/or for storing energy from a load or a grid, wherein automotive traction batteries are used.

In order to stabilize an existing power supply, to provide balancing power or to buffer energy gained from regenerative energy sources conventional power plants are usually used that are operated in an autarkic operation by use of small batteries and/or emergency power diesel. Furthermore, due to energy revolution, demand for balancing power increases and it is desirable to provide an economic, environmental and innovative solution for providing energy, thus in particular storing and releasing energy according to demand.

Automotive traction batteries are used individually in electro-mobility for driving automobiles and are in particular lithium-high-voltage batteries. When use of said batteries in automobiles is finished, they have to be disposed so far with spending big efforts what is time-consuming, expensive and non-economic. Because of their differing design in comparison with standard batteries from other applications, automotive batteries cannot be freely connected in series or parallel without amending their structure at least partially.

DE 102013019373 A1 describes a first approach of a stationary application mainly in the field of building technology, wherein automotive traction batteries that have already been used in automobiles are reused.

US 2012/013298 A1 discloses an electric vehicle charger 10 for storing energy from an AC power source 20. The electric vehicle charger 10 comprises a battery system comprising multiple electric vehicles 12 with DC batteries. An AC/DC rectifier 14 electrically connects the AC power source 20 with the DC batteries of multiple electric vehicles 12 and converts the AC power to DC power. Each of the vehicles 12 is connected to the AC power source 20 via a ground fault circuit interrupter 16 and a physical electrical disconnect 18.

It is an object of the invention to provide an improved stationary energy installation, in particular for power supply, grid stabilization, energy storage and/or emergency power supply, wherein automotive traction batteries can be used.

The object of the present invention is achieved by a stationary energy installation for powering a load or a grid and/or for storing energy from a load or a grid, in particular a stationary energy installation for power supply, energy storage, grid stabilization and/or emergency power supply, according to claim 1. The stationary energy installation comprises a battery system for power supply and/or energy storage, comprising at least a first automotive traction battery and a second automotive traction battery and/or a first set of automotive traction batteries and a second set of automotive traction batteries, each set comprising at least a first automotive traction battery and a second automotive traction battery. The stationary system further comprises electric means connected between the battery system and the load or the grid to adapt the power issued from the battery system to the load or the grid power characteristics and/or to adapt the power issued from the load or the grid to the battery system characteristics. Each automotive traction battery comprises a ground fault monitoring unit respectively an isolation monitoring unit and a disconnect switch having an operational position wherein the automotive traction battery is able to supply power and/or to store energy and a ground fault detection position wherein the automotive traction battery does not supply power and/or store energy. According to the invention the stationary energy installation further comprises battery insulation means to electrically isolate the automotive traction batteries and/or sets of automotive traction batteries from each other and/or against ground.

In other words: The stationary energy installation comprises at least two automotive traction batteries, wherein each of said automotive traction batteries comprises a ground fault monitoring unit for monitoring a ground fault respectively a ground fault current of the respective automotive traction battery and for shutting off or respectively disconnecting said respective automotive traction battery in case of a detected ground fault. The at least two automotive batteries are electrically isolated from each other and/or against ground within the stationary energy installation in such a way that in case of a ground fault detected by a ground fault monitoring unit of at least one of the at least two automotive batteries, a response of another ground fault monitoring unit is prevented. Thus, the at least two or more automotive traction batteries and/or the at least two or more sets of automotive traction batteries are connected to each other respectively integrated within the stationary energy installation in such a way that they can be operated independently from each other and the different ground fault monitoring units will not influence each other.

The automotive traction batteries could be new or have been already used in electro-mobility. By electrical isolation of the battery installation respectively galvanic isolation of the automotive traction batteries and/or sets of automotive traction batteries, flow of compensating currents between said automotive traction batteries which usually have different voltage levels, aging, capacity, power, state of charge and/or state of health is prevented during operation of the stationary energy system. Therefore isolating means are required for connecting the automotive traction batteries of the stationary energy installation.

The stationary energy installation can be coupled to a load or a power grid and therefore be used for power supply, energy storage, for example energy storage gained from regenerative energy sources, grid stabilization and/or emergency power supply. In addition, an autarkic power supply of a power plant, in particular a conventional power plant can be optimized by use of such a stationary energy installation or primary balancing power might be provided during operation.

An advantage of the stationary energy installation according to the invention is that automotive traction batteries (new or used) are used for stationary applications, what is advantageous with regard to economic, environmental, safety and innovative aspects.

The isolation monitoring unit opens the disconnect switch respectively main contactor of the automotive traction battery or avoids a closing of the main contactor of respective automotive traction battery in case of a detected ground fault current above a limit, for example between the automotive traction battery and their housing, that is large enough, thus exceeds a certain threshold, in order to shut off or do not switch on the defective automotive traction battery. This is necessary when operating the automotive traction battery in an automobile and is also realized within the stationary system. Each of the automotive traction batteries further comprises a battery management system (**B**attery **M**anagement **S**ystem, **BMS**). Thus, according to the invention, the safety concept of automotive traction batteries, namely comprising an isolation monitoring unit and the safety system and control and monitoring unit of the batteries (BMS) is taken over and the construction of the stationary energy installation is adapted to benefit from this safety concept. As it is not possible to operate automotive traction batteries in series or parallel so far without disassembling or decapsulating and without any hardware or software changes, e.g. modification of the BMS software, the invention proposes therefore to separate or uncouple the automotive traction batteries from each other by galvanic isolation. This prevents a fall out of all batteries of the stationary energy installation in case of a ground fault detected only by one of the isolation monitoring units of only one of the batteries. The invention therefore provides technical components and concept how the automotive traction batteries (new or used) can be used as in the stationary energy installation.

According to a preferred embodiment, the stationary energy installation further comprises at least one switching device to connect one or the other of the automotive traction batteries to the electric means, in particular to connect the first automotive traction battery or the second automotive traction battery and/or the first automotive traction battery or the second automotive traction battery of the first set of batteries and/or the first automotive traction battery or the second automotive traction battery of the second set of batteries to the electric means. In other words: The at least one switching device is coupled to at least two automotive batteries and is configured such that only one of the at least two automotive batteries is operable at a time. This is advantageous as second use automotive traction batteries usually have different voltages, aging, capacity, power and/or state of charge and depending on application of the stationary energy installation one or the other automotive traction battery can be used for powering a load or a grid and/or for storing energy from a load or a grid.

In particular, the at least one switching device connects one or the other automotive traction battery to the corresponding part of electric means and/or insulation means, in particular to a corresponding converter. Therefore, the required components of electric means and insulation means, thus converters and/or transformers, can be significantly reduced. Furthermore, the capacity of the battery system in relation to the required components for power electronics is increased. Only one of the batteries or only one of the batteries of a set of batteries is connected to the converter at the same time, wherein in case of providing energy for the power grid or a power plant, a battery or batteries of several sets having higher state of charge is or are connected and in case of storing energy, for example in order to stabilize the power grid, a battery or batteries of several sets having a lower state of charge is or are connected so that energy can be captured from the power grid and can be used for loading the battery.

In a preferred embodiment, the stationary energy installation comprises first battery insulation means for electrically isolating the first and the second automotive traction battery from each other and/or for electrically isolating the first automotive traction battery and the second automotive traction battery of the first set of batteries from each other and/or comprises for electrically isolating the first automotive traction battery and the second automotive traction battery of the second set of batteries from each other.

Preferably, the stationary energy installation comprises second battery insulation means for electrically isolating the first set of batteries and the second set of batteries from each other. In case of more than two sets of automotive traction batteries, the stationary energy installation in particular comprises further battery insulation means, for electrically isolating groups of sets of automotive traction batteries from each other.

The electrical isolation of the automotive traction batteries from each other and/or against ground can be achieved by different circuit variants or system designs. In a preferred embodiment, the electric means comprise at least a galvanic insulated component chosen between DC/DC converter, DC/AC converter or transformer, said least galvanic insulated component being at least a part of the batteries insulation means. If the stationary energy installation is provided with a switching device as mentioned before the electric means respectively insulation means comprise in particular a common galvanically insulated component for the first and the second automotive traction battery, in particular for the first and the second automotive traction battery of the first set of automotive traction batteries and/or the first and the second automotive traction battery the second set of automotive traction batteries.

According to another preferred embodiment, the stationary energy installation further comprises racks, each rack surrounding one of the automotive traction batteries and electrically isolating the automotive traction batteries from each other, said racks being at least a part of the batteries insulation means. In other words: Each of the at least two automotive traction batteries is arranged, respectively fixed within a rack, and the first and the second automotive battery, respectively the at least two automotive traction batteries are electrically isolated from each other and/or against ground by isolated implementation in the racks.

According to a preferred embodiment, the automotive traction batteries are electrically isolated from each other and/or against ground by use of battery insulation means comprising an isolating layer surrounding each automotive traction battery within the rack. In other words: Electrical isolation of the first and the second automotive battery, respectively the at least two automotive traction batteries, in particular the isolated implementation of the automotive traction batteries within the rack is realized by use of isolating means comprising an isolating layer surrounding each automotive traction battery against the racks, in particular an isolating layer surrounding each of the automotive traction batteries completely, for electrically respectively galvanically isolating the at least two automotive traction batteries against each other and/or against ground. The racks themselves are connected to ground. Additionally the insulation means can comprise galvanic insulated components as mentioned above.

For monitoring a ground fault of the entire stationary system, it is advantageous if the stationary energy installation comprises an additional, central ground fault monitoring unit. Said additional, central ground fault monitoring unit is in particular arranged downstream of the isolating means, thus between the isolating means and the power grid and/or the load and/or a power plant.

The invention will be described in further detail hereinafter with reference to the drawings being illustrated in a schematic manner, and in which
- FIG 1: a stationary energy installation comprising a first and a second automotive traction battery,
- FIG 2: a stationary energy installation comprising a first and a second automotive traction battery and a switching device,
- FIG 3: a stationary energy installation comprising a first and a second set of automotive traction batteries, wherein automotive traction batteries are electrically isolated from each other by use of a DC/AC converter in combination with a transformer,
- FIG 4: a stationary energy installation comprising a first and a second set of automotive traction batteries, wherein the automotive traction batteries are electrically isolated from each other by use of a DC/DC converter,
- FIG 5: a stationary energy installation comprising a first and a second set of automotive traction batteries, wherein the automotive traction batteries are arranged within racks and are electrically isolated from each other by use of a DC/DC converter in combination with an isolating layer,
- FIG 6: a stationary energy installation comprising a first and a second set of automotive traction batteries, wherein the automotive traction batteries are arranged within racks and are electrically isolated from each other by use of a galvanic isolated DC/DC.

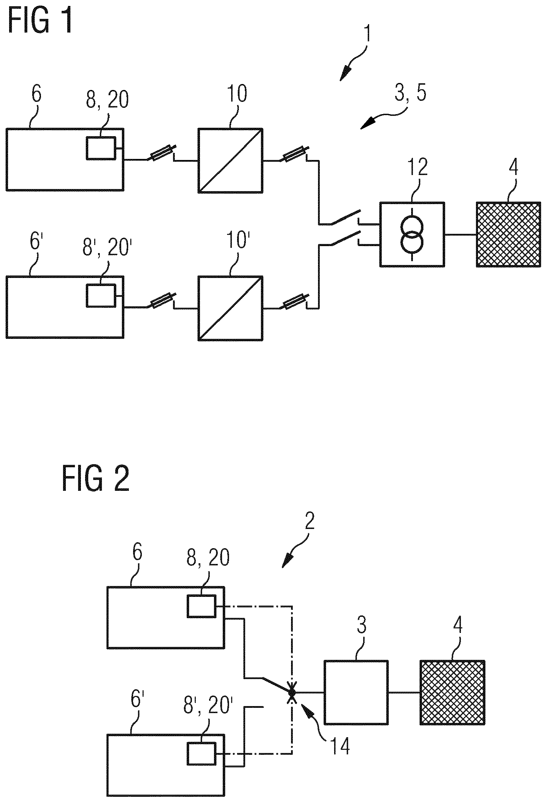

Fig. 1 shows a stationary energy installation 1 comprising a first automotive traction battery 6 and a second automotive traction battery 6' forming a battery system being able to supply power to a grid 4 and/or to store energy from the grid 4. The automotive traction batteries 6, 6' could be new or have already been used in electro-mobility. The first automotive battery 6 and the second automotive battery 6' are connected to the grid 4 by electric means 3 that are configured to adapt power issued from the battery system 6, 6' to the grid power characteristics and to adapt the power issued from the grid 4 to the battery system characteristics.

Each automotive traction battery 6, 6' comprises a ground fault monitoring unit respectively an isolation monitoring unit 8, 8'. Further each automotive traction battery 6, 6' comprises a disconnect switch 20, 20' having an operational position wherein the automotive traction battery 6, 6' is able to supply power and/or to store energy and a ground fault detection position wherein the automotive traction battery 6, 6' does not supply power and/or store energy, thus the disconnect switches 20, 20' are provided for disconnecting a defective automotive traction battery 6, 6' in case of a detected ground fault.

In order to electrically isolate the first automotive traction battery 6 and the second automotive traction battery 6' from each other, the stationary energy installation 2 comprises battery insulation means 5, presently comprising galvanically isolated components 10, 10' and a transformer 12. Thus in case of detected ground fault of one of the automotive traction batteries 6, 6' by ground fault monitoring unit 8, 8', the respective other ground fault monitoring unit 8, 8' respectively the respective other disconnect switch 20, 20' will not be influenced and respective other automotive traction batteries 6, 6' can be operated further. The insulation means 5 comprise first battery insulation means that are presently part of respectively can be integrated within the electric means 3 and can comprise at least a galvanic insulated component chosen between DC/DC converter, DC/AC converter or transformer. Another possibility is to galvanically isolate the first automotive traction battery 6 and the second traction automotive battery 6' from each other and/or against ground by isolated implementation within racks, which surround each of the batteries 6, 6'. Some realization mode for electrical isolation will be described in more detail below, wherein stationary energy installations with four automotive traction batteries are illustrated. However, it should go without saying that even another amount of automotive traction batteries can be used within the stationary energy installation.

Fig. 2 shows a stationary energy installation 2 comprising a first automotive traction battery 6 and a second automotive traction battery 6' forming a battery system being able to supply power to a grid 4 and to store energy from the grid 4 and being connected to the grid 4 by electric means 3 that are configured to adapt power issued from the battery system 6, 6' to the grid power characteristics and to adapt the power issued from the grid 4 to the battery system characteristics.

Each automotive traction battery 6, 6' comprises a ground fault monitoring unit 8, 8' and a disconnect switch 20, 20', both having the same function as described above.

In order to avoid that a detected ground fault on one of the automotive traction batteries trigs a detection of a ground fault on the other automotive traction battery, the stationary energy installation 2 comprises first battery insulation means. The stationary energy installation 2 further comprises a switching device 14 that connects the first automotive traction battery 6 or the second automotive traction battery 6' to the electric means 3. The insulation means can be integrated within the electric means 3 can comprise at least a galvanic insulated component chosen between DC/DC converter, DC/AC converter or transformer or the first automotive traction battery 6 and the second traction automotive battery 6' are electrically isolated from each other and/or against ground by isolated implementation within racks, which surround each of the batteries. The switching device 14 also contributes to the isolation between the first automotive battery 6 and the second automotive battery 6'.

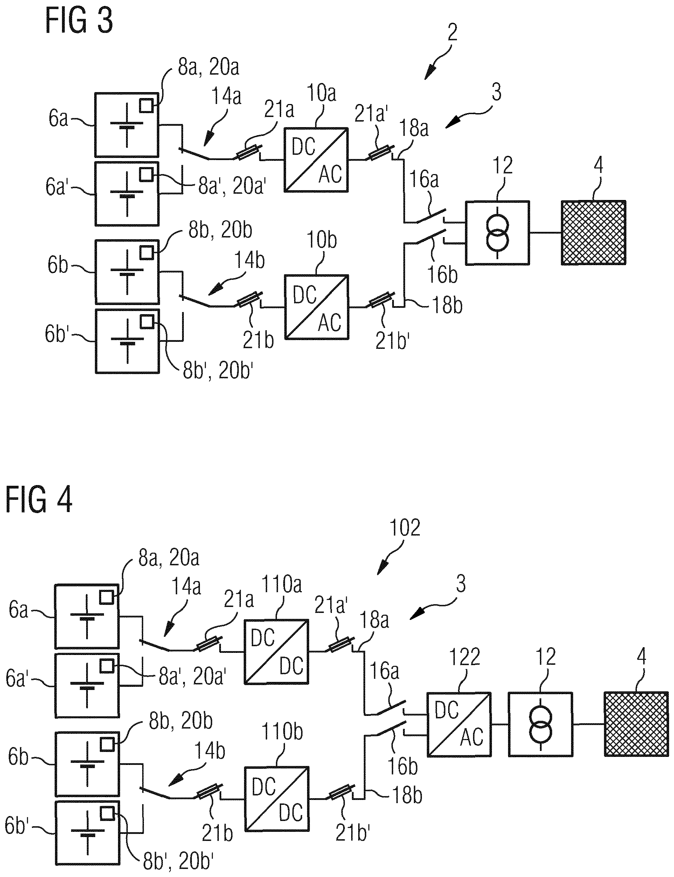

Fig. 3 shows a stationary energy installation 2 for powering a grid 4 and for storing energy from the grid 4. In comparison to Fig.1, the stationary energy installation 2 comprises four automotive traction batteries 6a, 6a', 6b, 6b', grouped on a first set of two automotive traction batteries 6a, 6a' and a second set of two automotive traction batteries 6b, 6b' that could have been already used in automobile applications. Each automotive traction battery 6a, 6a', 6b, 6b'comprises a ground fault unit 8a, 8a', 8b, 8b' for monitoring respectively detecting a ground fault of batteries 6a, 6a', 6b, 6b' and a disconnect switch 20a, 20a', 20b, 20b'. Even more than four, for example six, eight, ten automotive traction batteries and so on can be installed. The automotive traction batteries 6a, 6a', 6b, 6b' are electrically isolated from each other by battery isolating means being part of electric means that connect the battery system to the grid 4, in the present case comprising DC/AC converters 10a, 10b in combination with a transformer for galvanic isolation 12 with one or more secondary windings that is arranged downstream between the DC/AC converters 10a, 10b and the power grid 4. The DC/AC converters 10a, 10b are part of second isolating means that electrically isolate the first set of automotive traction batteries 6a, 6a' and the second set of automotive traction batteries 6b, 6b'.

The stationary energy installation 2 further comprises two switching devices 14a, 14b, wherein a first switching device 14a is provided to switch between the first automotive traction battery 6a and the second automotive traction battery 6a' of the first set of batteries and a second switching device 14b is provided to switch between the first automotive traction batteries 6b and the second automotive traction battery 6b' of the second set of batteries in order to connect respective battery to the electric means 3. The switching device 14a, 14b might be any known switch, for example could be a relay or an electric contactor. Further each switching device 14a, 14b could be a changeover contact or it could be separated into two single contacts or contactors (normally open (NO) and normally close (NC) contact). It could be a three positions switch allowing to connect battery 6a or battery 6a' or to disconnect both batteries, but any other arrangement of switches that would allow jointly or separately the operations of normal switch can be used. The switching device 14a, 14b allows separate coupling of the batteries 6a and 6a' to their common isolation means, presently the common DC/AC converter 10a respectively separate coupling of the batteries 6b and 6b' to their common isolation means, presently the common DC/AC converter 10b.

According to Fig. 3, batteries 6a and 6b are in operation. The transformer 12 that is part of second battery isolation means and therefore contributes to the electrical isolation of the first set of batteries 6a, 6a' from the second set of batteries6b, 6b' is a single transformer 12 that is used commonly for all batteries 6a, 6a', 6b, 6b' with at least one secondary winding. Each DC/AC-converter 10a, 10b is coupled to the transformer 12 by switches 16a, 16b that allow connecting either the batteries 6a or 6a' or the batteries 6b or 6b' to said transformer 12. Even connecting of two batteries being coupled to different DC/AC-converters 10a, 10b at the same time is possible by switches 16a, 16b, for example battery 6a and battery 6b as it is indicated in Fig. 3.

In summary, battery 6a or battery 6a' are connected to the power grid 4 by an electric current conduction 18a via the DC/AC-converter 10a and the transformer 12, battery 6b or battery 6b' are connected to the power grid 4 by an electric current conduction 18b via the DC/AC-converter 10b and the transformer 12. For example, once the ground fault monitoring unit 8a or 8a' - depending on the battery 6a, 6a' - detects a ground fault respectively a ground fault current of battery 6a or 6a', the disconnect switch 20a will disconnect the battery with the ground fault 6a or 6a'. The disconnect switch 20a might also be integrated within the switching device 14a, so for example, it could be a three positions switch allowing to connect battery 6a or battery 6a' or to disconnect both batteries, but any other arrangement of switches that would allow jointly or separately the operations of normal switch and of ground fault disconnection switch can be used. This applies also for automotive traction batteries 6b, 6b', disconnect switch 20b and switching device 14b. In Fig 2 for example, in case of a ground fault of battery 6a, the disconnect switch 20a shuts of battery 6a and first switching device 14a can be switched to automotive battery 6a', so that battery 6a' can be used further in combination with one of the batteries 6b, 6b'. Furthermore, safety switches 21a, 21a' are provided within the electric current conduction 18a and safety switches 21b, 21b' are provided within the electric current conduction 18b that are configured to open or constantly close the electric current conduction 18a, 18b for batteries 6a, 6a' respectively batteries 6b, 6b'. Thereby a first set of batteries 6a, 6a' or the second set of batteries 6b, 6b' can be used or disconnected in common depending on whether safety switches 21a, 21a', 21b, 21b' are open or closed.

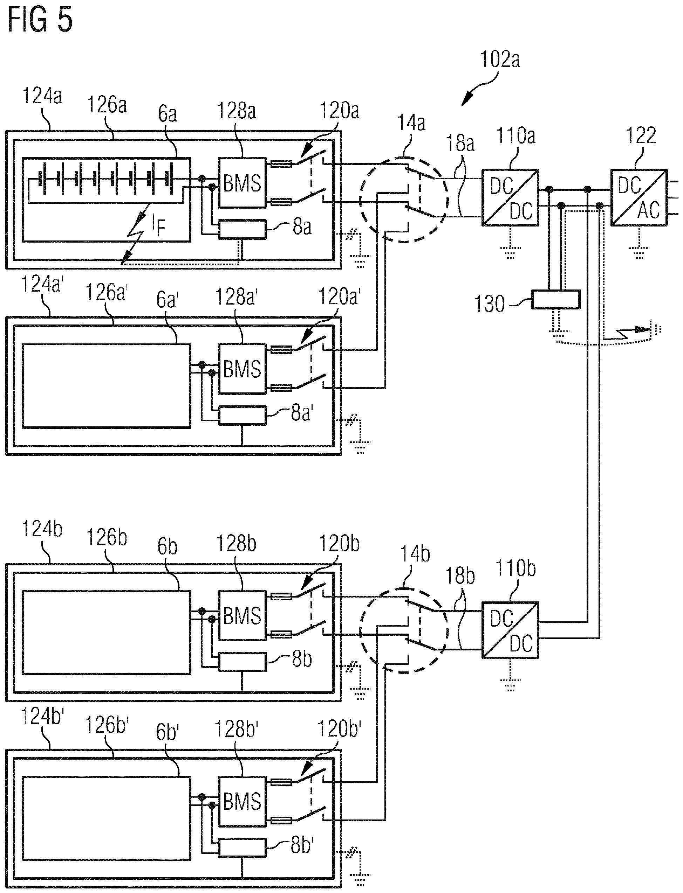

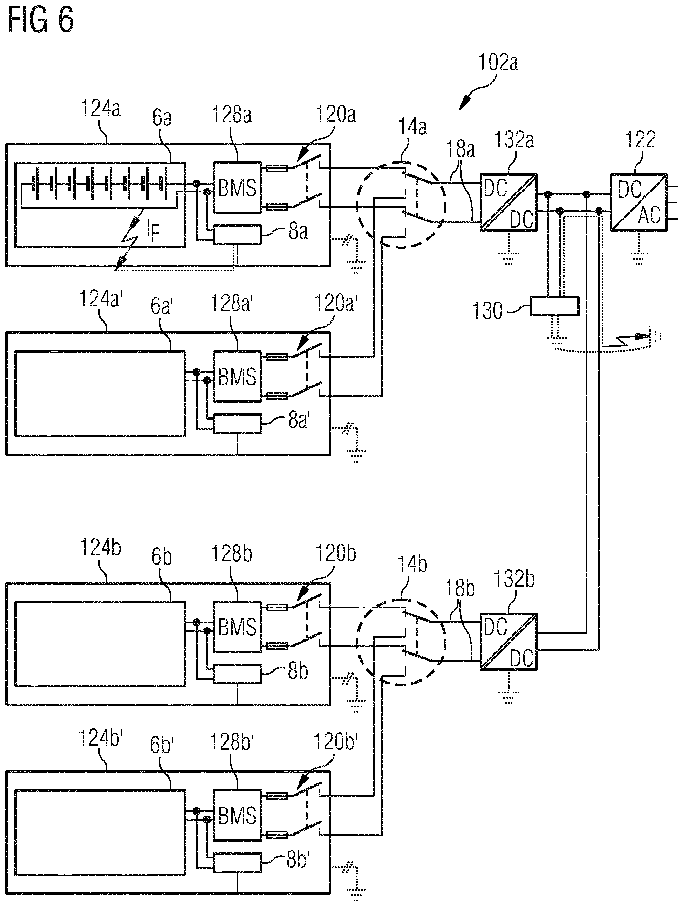

Fig. 4 shows a stationary energy installation 102 for stabilizing a power grid 4 according to a second embodiment. Components of the stationary energy installation 102 that comply with components of the stationary energy installation 2 according to the embodiment illustrated in Fig. 3 are labelled with identical reference signs for a simplified overview. The stationary energy installation 102 likewise comprises four automotive traction batteries 6a, 6a', 6b, 6b', grouped on a first set of two automotive traction batteries 6a, 6a' and a second set of two automotive traction batteries 6b, 6b' that could have already been used in automobile applications. Each automotive traction battery 6a, 6a', 6b, 6b' comprises an isolation monitoring unit 8a, 8a', 8b, 8b' for monitoring respectively detecting a ground fault of batteries 6a, 6a', 6b, 6b' and a disconnect switch 20a, 20a', 20b, 20b'. The automotive traction batteries 6a, 6a', 6b, 6b' are electrically isolated from each other by battery isolating means, in the present case comprising DC/DC converters 110a, 110b being part of electric means and being arranged between the automotive traction batteries 6a, 6a', 6b, 6b' and the power grid 4. The electrical isolation of the automotive traction batteries 6a, 6a', 6b, 6b' by use of isolating means comprising a DC/DC-converter can be realized according to two differing embodiments, that are shown in more detail in Fig. 5 and Fig. 6 and will be described in more detail below. To supply current to the power grid 4, the electric means further comprise a common DC/AC-converter 122 in combination with a downstream common transformer 12 being arranged between the DC/DC converters 110a, 110b and the power grid 4.

The stationary energy installation 102 further comprises two switching devices 14a, 14b, wherein even here first switching device 14a is provided to switch between the first automotive traction battery 6a and the second automotive traction battery 6a' of the first set of batteries and a second switching device 14b is provided to switch between the first automotive traction batteries 6b and the second automotive traction battery 6b' of the second set of batteries so that separate coupling of the batteries 6a and 6a' to their common DC/DC converter 110a respectively separate coupling of the batteries 6b and 6b' to their common DC/DC converter 110b is possible. According to Fig. 4, batteries 6a and 6b are operated.

Each DC/DC-converter 110a, 110b is coupled to the DC/AC converter 122 by switches 16a, 16b that allow connecting either the batteries 6a or 6a' or the batteries 6b or 6b' to said DC/AC converter 122 or connecting of two batteries being coupled to different DC/DC-converters 110a, 110b at the same time and therefore to the power grid 4.

In summary, battery 6a or battery 6a' are connected to the power grid 4 by an electric current conduction 18a via the DC/DC-converter 110a, the common DC/AC-converter 122 and the transformer 12, battery 6b or battery 6b' are connected to the power grid 4 by an electric current conduction 18b via the DC/DC-converter 110b, the common DC/AC-converter 122 and the transformer 12, so that once the isolation monitoring unit 8a or 8a' detects a ground fault of battery 6a or 6a', respective disconnect switch 20a or 20a' shuts off respective battery 6a, 6a'. The other battery of the first set of batteries might be used further and be coupled to the grid 4 by switching device 14a. Safety switches 21a, 21a', 21b, 21b' are provided to close or open the electric current conduction 18a to disconnect the first set of batteries 6a, 6a' or the second set of batteries 6b, 6b'. By opening for example safety switches 21a and/or 21a', the second set of batteries 6b, 6b' can be used further, thus the electric current conduction 18b when corresponding switches 21a, 21a' remain closed.

Fig. 5 shows a stationary energy installation 102a, in conformity with Fig. 4, but in more detail and according to a first embodiment of electrical isolation, wherein the isolating means comprise DC/DC-converters 110a, 110b and isolating layers 126a, 126a', 126b, 126b' for electrically isolating the automotive traction batteries 6a, 6a', 6b, 6b' from each other.

Each automotive traction battery 6a, 6a', 6b, 6b' is arranged within a rack 124a, 124a', 124b, 124b' and the automotive traction batteries 6a, 6a', 6b, 6b' are electrically isolated from each other and against ground by isolated implementation of the automotive traction batteries 6a, 6a', 6b, 6b' within the racks 124a, 124a', 124b, 124b' by insulation means, here comprising isolating layers 126a, 126a', 126b, 126b' that surround each of the automotive traction batteries 6a, 6a', 6b, 6b' completely. Isolating layers 126a, 126a', 126b, 126b' are positioned between the automotive traction batteries 6a, 6a', 6b, 6b' and the racks 124a, 124a', 124b, 124b'. The four automotive traction batteries 6a, 6a', 6b, 6b' are even here grouped on a first set of two automotive traction batteries 6a, 6a' and a second set of two automotive traction batteries 6b, 6b' and the stationary energy installation 102a comprises two switching devices 14a, 14b for connecting either battery 6a or 6a' of the first set of batteries to electric means and for connecting either battery 6b or 6b' of the first set of batteries to electric means.

Each automotive traction battery 6a, 6a', 6b, 6b' comprises an internal battery management system 128a, 128a', 128b, 128b' (BMS) for surveying and controlling the batteries 6a, 6a', 6b, 6b' and an isolation monitoring unit 8a, 8a', 8b, 8b' for detecting a ground fault respectively a ground fault current I_{F} of respective battery 6a, 6a', 6b, 6b'. In case of a detected ground fault of one automotive traction battery 6a, 6a', 6b, 6b', corresponding isolation monitoring unit 8a, 8a', 8b, 8b' opens a disconnect switch 120a, 120a', 120b, 120b' of defective battery 6a, 6a', 6b, 6b' in order to shut off respectively disconnect the defective automotive traction battery 6a, 6a', 6b, 6b'. As the racks 124a, 124a', 124b, 124b' respectively automotive traction batteries 6a, 6a', 6b, 6b' are electrically isolated from each other, only the ground fault monitoring unit of defective battery reacts and shuts off the latter, for example isolation monitoring unit 8a shuts off automotive traction battery 6a in case of failure. The other automotive traction batteries 6a', 6b, 6b' and their isolation monitoring units 8a', 8b, 8b' do not respond, the disconnect switches 120a', 120b, 120b' do not disconnect and said batteries 6a', 6b, 6b' continue operating without any problems. In other words, the automotive traction battery 6a, 6a', 6b, 6b' respectively isolation monitoring units 8a, 8a', 8b, 8b' operate completely independent from each other due to the electrical respectively galvanic isolation and do not influence each other.

In order to monitor to survey the entire stationary electrical installation 102a and to detect a ground fault of the entire stationary electrical installation 102a, it comprises an additional, central ground fault monitoring unit 130 that is arranged downstream of DC/DC-converters 110a, 110b and outside the racks 124a, 124a', 124b, 124b'. A common ground fault monitoring unit 130 is used for all automotive traction batteries 6a, 6a', 6b, 6b'.

Fig. 6 shows a stationary energy installation 102b, essentially in conformity with Fig. 4, but in more detail and according to a second embodiment of electrical isolation in more detail. The difference to stationary energy installation 102b according to Fig. 5 is only that the isolating means comprise galvanically isolated DC/DC-converters 132a, 132b for electrically isolating the automotive traction batteries 6a, 6a', 6b, 6b' from each other. As further components of the stationary energy installation 102b correspond to that of stationary energy installation 102a, reference is made to explanations above.

Instead of DC/DC-converters in combination with an isolating layer as illustrated in Fig. 5 or instead of galvanically isolated DC/DC-converter as illustrated in Fig. 6, DC/AC-converters in combination with a transformer as shown in Fig. 3 or galvanically isolated DC/AC-converter can be used in analogy for realizing the galvanic isolation of the automotive traction batteries respectively the isolated implementation within the racks.

### References

- 1, 2, 102, 102a, 102b: stationary energy installation
- 3: electric means
- 4: power grid
- 5: battery insulation means
- 6, 6', 6a, 6a', 6b, 6b': automotive traction battery
- 8, 8', 8a, 8a', 8b, 8b': ground fault monitoring unit
- 10a, 10b: DC/AC converter
- 12: transformer
- 14, 14a, 14b: switching device
- 16a, 16b: switch
- 18a, 18b: electric current conduction
- 20, 20a, 20a', 20b, 20b': disconnect switch
- 21a, 21a', 21b, 21b': safety switch
- 110a, 110b: DC/DC converter
- 120a, 120a', 120b, 120b': disconnect switch
- 122: DC/AC converter
- 124a, 124a', 124b, 124b': isolating layer
- 126a, 126a', 126b, 126b': rack
- 128a, 128a', 128b, 128b': battery management system
- 130: ground fault monitoring unit
- 132a, 132b: electrically isolated DC/DC converter

- BMS: Battery Management System
- I_{F}: ground fault current

## Claims

1. Stationary energy installation (2; 102; 102a; 102b) for powering a load or a grid (4) and/or for storing energy from a load or a grid (4), comprising:
- a battery system for power supply and/or energy storage, comprising at least a first set of automotive traction batteries (6a, 6a') and a second set of automotive traction batteries (6b, 6b'), each set comprising at least a first automotive traction battery (6a, 6b) and a second automotive traction battery (6a'; 6b'),
- electric means (3) connected between the battery system and the load or the grid (4), to adapt the power issued from the battery system to the load and/or the grid power characteristics or to adapt the power issued from the load or the grid to the battery system characteristics, wherein the electric means (3) comprises at least a galvanic insulated component chosen between a DC/DC converter, a DC/AC converter or a transformer, said at least galvanic insulated component being at least a part of a batteries insulation means, and
- each automotive traction battery (6a, 6a', 6b, 6b') comprising a ground fault monitoring unit (8a, 8a', 8b, 8b') and a disconnect switch (20a, 20b; 120a, 120a', 120b, 120b') having an operational position wherein the automotive traction battery (6a, 6a', 6b, 6b') is able to supply power and/or to store energy and a ground fault detection position wherein the automotive traction battery (6a, 6a', 6b, 6b') does not supply power and/or store energy,
**characterized in that**
the stationary energy installation (2, 102, 102a, 102b) comprises battery insulation means (5) to electrically isolate the sets of automotive traction batteries (6a, 6a', 6b, 6b') from each other and/or against ground, wherein said at least galvanic insulated component being at least a part of the battery insulation means (5); and
the stationary energy installation (2, 102, 102a, 102b) further comprises at least one switching device (14a, 14b) to connect the first automotive traction battery (6a) or the second automotive traction battery (6a') of the first set of batteries and/or the first automotive traction battery (6b) or the second automotive traction battery (6b') of the second set of batteries to the electric means (3).

2. Stationary energy installation according to claim 1, comprising a first battery insulation means for electrically isolating the first automotive traction battery (6a) and the second automotive traction battery (6a') of the first set of batteries (6a, 6a') from each other and/or for electrically isolating the first automotive traction battery (6b) and the second automotive traction battery (6b') of the second set of batteries (6b, 6b') from each other.

3. Stationary energy installation according to any of the preceding claims, comprising second battery insulation means for electrically isolating the first set of batteries (6a; 6a') and the second set of batteries (6b, 6b') from each other.

4. Stationary energy installation according to any of the preceding claims, wherein it further comprises racks (126a, 126a', 126b, 126b'), each rack (126a, 126a', 126b, 126b') surrounding one of the automotive traction batteries (6a, 6a', 6b, 6b') and electrically isolating the automotive traction batteries from each other, said racks (126a, 126a', 126b, 126b') being at least a part of the batteries insulation means.

5. Stationary energy installation according to claim 4, wherein the automotive traction batteries (6a, 6a', 6b, 6b') are electrically isolated from each other and/or against ground by use of battery insolation means comprising an isolating layer (124a, 124a', 124b, 124b') surrounding each automotive traction battery (6a, 6a', 6b, 6b') within the rack (126a, 126a', 126b, 126b').

6. Stationary energy installation according to any of the preceding claims, comprising a central ground fault monitoring unit (130) for monitoring a ground fault of the entire stationary system energy installation, wherein the central ground fault monitoring unit (130) is in particular arranged downstream of the battery insulation means.

## Patentansprüche

1. Stationäre Energieanlage (2; 102; 102a; 102b) zum Speisen einer Last oder eines Stromnetzes (4) und/oder zum Speichern von Energie von einer Last oder einem Stromnetz (4), umfassend:
- ein Batteriesystem zur Leistungsversorgung und/oder Energiespeicherung, das mindestens einen ersten Satz von Kraftfahrzeug-Traktionsbatterien (6a, 6a') und einen zweiten Satz von Kraftfahrzeug-Traktionsbatterien (6b, 6b') umfasst, wobei jeder Satz mindestens eine erste Kraftfahrzeug-Traktionsbatterie (6a, 6b) und eine zweite Kraftfahrzeug-Traktionsbatterie (6a'; 6b') umfasst,
- ein elektrisches Mittel (3), das zwischen das Batteriesystem und die Last oder das Stromnetz (4) geschaltet ist, um die vom Batteriesystem ausgegebene Leistung an die Leistungscharakteristiken der Last und/oder des Stromnetzes anzupassen, oder die von der Last oder dem Stromnetz ausgegebene Leistung an Charakteristiken des Batteriesystems anzupassen, wobei das elektrische Mittel (3) eine galvanisch isolierte Komponente umfasst, die aus einem GS-GS-Wandler, einem GS-WS-Wandler oder einem Transformator ausgewählt ist, wobei die galvanisch isolierte Komponente zumindest ein Teil eines Batterieisoliermittels ist, und
- wobei jede Kraftfahrzeug-Traktionsbatterie (6a, 6a', 6b, 6b') eine Erdfehlerüberwachungseinheit (8a, 8a', 8b, 8b') und einen Trennschalter (20a, 20b; 120a, 120a', 120b, 120b') umfasst, der eine Betriebsstellung, in welcher die Kraftfahrzeug-Traktionsbatterie (6a, 6a', 6b, 6b') zum Bereitstellen von Leistung und/oder Speichern von Energie in der Lage ist, und eine Erdfehlererkennungsstellung aufweist, in welcher die Kraftfahrzeug-Traktionsbatterie (6a, 6a', 6b, 6b') weder Leistung bereitstellt noch Energie speichert,
**dadurch gekennzeichnet, dass**
die stationäre Energieanlage (2, 102, 102a, 102b) Batterieisoliermittel (5) umfasst, um die Sätze von Kraftfahrzeug-Traktionsbatterien (6a, 6a', 6b, 6b') voneinander und/oder von Erde zu trennen, wobei die mindestens eine galvanisch isolierte Komponente zumindest ein Teil des Batterieisoliermittels (5) ist; und
die stationäre Energieanlage (2, 102, 102a, 102b) mindestens eine Schaltvorrichtung (14a, 14b) umfasst, um die erste Kraftfahrzeug-Traktionsbatterie (6a) oder die zweite Kraftfahrzeug-Traktionsbatterie (6a') des ersten Satzes von Kraftfahrzeug-Traktionsbatterien und/oder die erste Kraftfahrzeug-Traktionsbatterie (6b) oder die zweite Kraftfahrzeug-Traktionsbatterie (6b') des zweiten Satzes von Kraftfahrzeug-Traktionsbatterien mit dem elektrischen Mittel (3) zu verbinden.

2. Stationäre Energieanlage nach Anspruch 1, umfassend ein erstes Batterieisoliermittel zum elektrischen Trennen der ersten Kraftfahrzeug-Traktionsbatterie (6a) und der zweiten Kraftfahrzeug-Traktionsbatterie (6a') des ersten Satzes von Batterien (6a, 6a') voneinander und/oder zum elektrischen Trennen der ersten Kraftfahrzeug-Traktionsbatterie (6b) und der zweiten Kraftfahrzeug-Traktionsbatterie (6b') des zweiten Satzes von Batterien (6b, 6b') voneinander.

3. Stationäre Energieanlage nach einem der vorhergehenden Ansprüche, umfassend ein zweites Batterieisoliermittel zum elektrischen Trennen des ersten Satzes von Batterien (6a, 6a') und des zweiten Satzes von Batterien (6b, 6b') voneinander.

4. Stationäre Energieanlage nach einem der vorhergehenden Ansprüche, wobei sie ferner Gestelle (126a, 126a', 126b, 126b') umfasst, jedes Gestell (126a, 126a', 126b, 126b') eine der Kraftfahrzeug-Traktionsbatterien (6a, 6a', 6b, 6b') umgibt und die Kraftfahrzeug-Traktionsbatterien elektrisch voneinander trennt, und die Gestelle (126a, 126a', 126b, 126b') zumindest ein Teil des Batterieisoliermittels sind.

5. Stationäre Energieanlage nach Anspruch 4, wobei die Kraftfahrzeug-Traktionsbatterien (6a, 6a', 6b, 6b') durch die Verwendung von Batterieisoliermitteln, die eine Trennschicht (124a, 124a', 124b, 124b') umfassen, die jede Kraftfahrzeug-Traktionsbatterie (6a, 6a', 6b, 6b') innerhalb des Gestells (126a, 126a', 126b, 126b') umgibt, elektrisch voneinander getrennt sind.

6. Stationäre Energieanlage nach einem der vorhergehenden Ansprüche, umfassend eine zentrale Erdfehlerüberwachungseinheit (130) zum Überwachen eines Erdfehlers der gesamten stationären Systemenergieanlage, wobei die zentrale Erdfehlerüberwachungseinheit (130) insbesondere stromabwärts der Batterieisoliermittel angeordnet ist.

## Revendications

1. Installation de production d'énergie stationnaire (2 ; 102 ; 102a ; 102b) destinée à alimenter une charge ou un réseau (4) et/ou à stocker de l'énergie provenant d'une charge ou d'un réseau (4), comprenant :
- un système de batteries pour une alimentation électrique et/ou un stockage d'énergie, comprenant au moins un premier ensemble de batteries de traction automobile (6a, 6a') et un second ensemble de batteries de traction automobile (6b, 6b'), chaque ensemble comprenant au moins une première batterie de traction automobile (6a, 6b) et une seconde batterie de traction automobile (6a' ; 6b') ;
- un moyen électrique (3) connecté entre le système de batteries et la charge ou le réseau (4), pour adapter la puissance délivrée par le système de batteries à la charge et/ou aux caractéristiques de puissance de réseau ou pour adapter la puissance délivrée par la charge ou le réseau aux caractéristiques du système de batteries, dans lequel le moyen électrique (3) comprend au moins un composant isolé galvaniquement choisi parmi un convertisseur continu-continu, un convertisseur continu-alternatif ou un transformateur, ledit au moins un composant isolé galvaniquement formant au moins une partie d'un moyen d'isolation de batteries ; et
- chaque batterie de traction automobile (6a, 6a', 6b, 6b') comprenant une unité de surveillance de défaut à la terre (8a, 8a', 8b, 8b') et un sectionneur (20a, 20b ; 120a, 120a', 120b, 120b') présentant une position opérationnelle dans laquelle la batterie de traction automobile (6a, 6a', 6b, 6b') est apte à fournir une puissance et/ou à stocker de l'énergie, et une position de détection de défaut à la terre dans laquelle la batterie de traction automobile (6a, 6a', 6b, 6b') ne fournit pas de puissance et/ou ne stocke pas d'énergie ;
**caractérisée en ce que** :
l'installation de production d'énergie stationnaire (2, 102, 102a, 102b) comprend un moyen d'isolation de batteries (5) pour isoler électriquement les ensembles de batteries de traction automobile (6a, 6a', 6b, 6b') les uns des autres et/ou de la terre, dans laquelle ledit au moins un composant isolé galvaniquement formant au moins une partie du moyen d'isolation de batteries (5) ; et
l'installation de production d'énergie stationnaire (2, 102, 102a, 102b) comprend en outre au moins un dispositif de commutation (14a, 14b) pour connecter la première batterie de traction automobile (6a) ou la seconde batterie de traction automobile (6a') du premier ensemble de batteries, et/ou la première batterie de traction automobile (6b) ou la seconde batterie de traction automobile (6b') du second ensemble de batteries, au moyen électrique (3).

2. Installation de production d'énergie stationnaire selon la revendication 1, comprenant un premier moyen d'isolation de batteries pour isoler électriquement la première batterie de traction automobile (6a) et la seconde batterie de traction automobile (6a') du premier ensemble de batteries (6a, 6a') l'une par rapport à l'autre et/ou pour isoler électriquement la première batterie de traction automobile (6b) et la seconde batterie de traction automobile (6b') du second ensemble de batteries (6b, 6b') l'une par rapport à l'autre.

3. Installation de production d'énergie stationnaire selon l'une quelconque des revendications précédentes, comprenant un second moyen d'isolation de batteries pour isoler électriquement le premier ensemble de batteries (6a, 6a') et le second ensemble de batteries (6b, 6b') l'un de l'autre.

4. Installation de production d'énergie stationnaire selon l'une quelconque des revendications précédentes, dans laquelle l'installation comprend en outre des bâtis (126a, 126a', 126b, 126b'), chaque bâti (126a, 126a', 126b, 126b') entourant l'une des batteries de traction automobile (6a, 6a', 6b, 6b') et isolant électriquement les batteries de traction automobile les unes des autres, lesdits bâtis (126a, 126a', 126b, 126b') formant au moins une partie du moyen d'isolation de batteries.

5. Installation de production d'énergie stationnaire selon la revendication 4, dans laquelle les batteries de traction automobile (6a, 6a', 6b, 6b') sont électriquement isolées les unes des autres et/ou de la terre, en faisant appel à un moyen d'isolation de batteries comprenant une couche isolante (124a, 124a', 124b, 124b') entourant chaque batterie de traction automobile (6a, 6a', 6b, 6b') à l'intérieur du bâti (126a, 126a', 126b, 126b').

6. Installation de production d'énergie stationnaire selon l'une quelconque des revendications précédentes, comprenant une unité centrale de surveillance de défaut à la terre (130) pour surveiller un défaut à la terre de l'ensemble de l'installation stationnaire de production d'énergie du système, dans laquelle l'unité centrale de surveillance de défaut à la terre (130) est en particulier agencée en aval du moyen d'isolation de batteries.
